# FASCICULE DE BREVET EUROPEEN

(11) **EP 0 430 795 B1**
(45) Date de publication et mention de la délivrance du brevet: **09.03.1994**
(21) Numéro de dépôt: 90403359.4
(22) Date de dépôt: 27.11.1990
(51) Int. Cl.: H02K 1/27

(54) **Rotor de moteur à aimants**
Rotor eines Motors mit Magneten
Rotor of a motor with magnets

(30) Priorité: 27.11.1989 FR 8915550
(43) Date de publication de la demande: 05.06.1991
(73) Titulaire: GEC ALSTHOM SA, 75116 Paris (FR)
(72) Inventeur: Royer, Laurent, F-21000 Dijon (FR)
(74) Mandataire: Weinmiller, Jürgen

(56) Documents cités:
- FR-A- 2 048 432
- US-A- 4 445 062

## Description

La présente invention concerne un rotor pour moteur à aimants et s'applique notamment à la réalisation d'un moteur synchrone à aimants permanents.

Un des problèmes majeurs rencontrés dans la réalisation des moteurs à aimants est celui posé par la fixation des tôles et des aimants entre eux et sur l'arbre du moteur. La fixation doit être robuste pour résister à toutes les contraintes mécaniques (efforts engendrés par la force centrifuge, transmission du couple entre rotor et arbre).

Par ailleurs, le type de fixation retenu doit être économique, et conduire notamment à des temps de montage réduits.

Des exemples de réalisation de rotors à aimants permanents sont décrits dans les documents US.A-4 445 062 et FR-A- 20 48 432 qui représentent l'art antérieur.

L'invention à pour objet un rotor pour un moteur à aimants comprenant au moins une paire de pôles magnétiques entre lesquels sont disposés des aimants à aimantation azimutale, et un arbre de rotation, caractérisé en ce que les pôles et les aimants sont solidarisés entre eux et à l'arbre du moteur par un profilé d'épaisseur constante et présentant en section des lobes en nombre égal à ceux des pôles du moteur, lesdits lobes étant relié deux à deux par des portions courbes sensiblement en arcs de cercle de diamètre voisin de celui de l'arbre du moteur.

Avantageusement, ledit profilé est choisi dans le groupe comprenant les alliages d'aluminium, les alliages de cuivre, l'acier inoxydable austénitique, la fibre de verre et la fibre de carbone.

Dans un mode particulier de réalisation, les tôles du rotor sont assemblées au moyen de coupelles d'extrémité serrées par des tiges filetées munies d'écrous.

En variante, les tôles du rotor sont assemblées au moyen de coupelles d'extrémité serrées par des tiges lisses munies d'anneaux dentelés.

Dans une autre variante, les tôles du rotor sont assemblées au moyen de coupelles d'extrémité serrées par des rivets.

Il peut être prévu des moyens pour renforcer le profilé, par exemple des tubes d'acier fendus engagés dans les lobes du profilé.

L'invention sera bien comprise par la description donnée ci-après d'un mode préféré de réalisation de l'invention en référence au dessin annexé dans lequel:
- la figure 1 est une vue en coupe, par un plan perpendiculaire à son axe de rotation, d'un rotor selon l'invention,
- la figure 2 est une vue en demi-coupe axiale d'un rotor dont les éléments sont assemblés par des tiges filetées,
- la figure 3 est une vue en demi-coupe axiale d'un rotor dont les éléments sont assemblés par des rivets,
- la figure 4 est une vue en demi-coupe axiale d'un rotor dont les éléments sont assemblés par des tiges lisses associées à des anneaux dentelés,
- les figures 5 et 6 illustrent le montage des tôles du rotor sur le profilé.

L'exemple choisi est celui d'un moteur à quatre pôles.

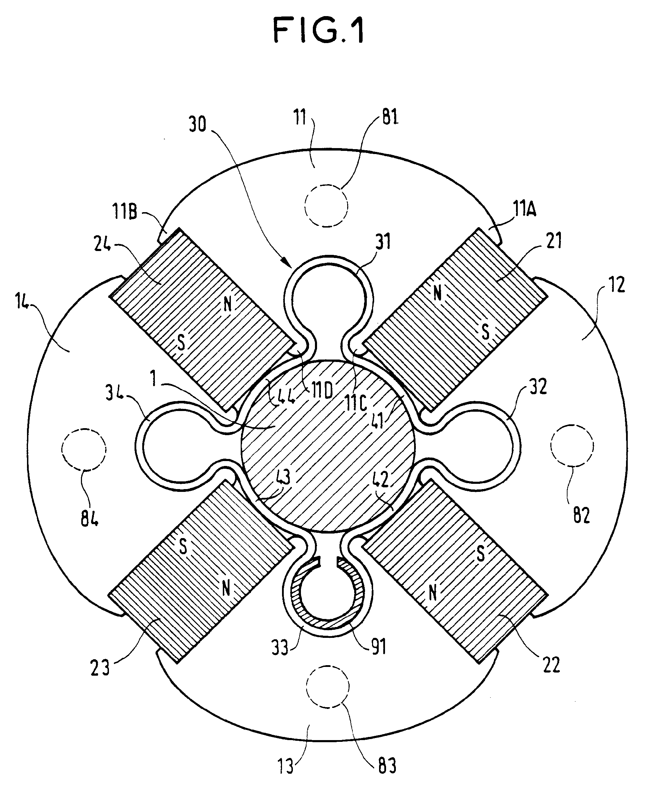

Dans la figure 1, la référence 1 désigne un arbre autour duquel sont disposés quatre pôles magnétiques 11, 12, 13 et 14, formés de tôles magnétiques découpées et serrées entre elles par des moyens décrits plus loin. Entre les tôles sont placés des aimants permanents 21, 22, 23 et 24 à aimantation azimutale, c'est-à-dire perpendiculaire à l'axe O de l'arbre et aux rayons partant de ce point. Deux aimants voisins présentent en regard l'un de l'autre des pôles nord (N) ou sud (S) de même nom.

Les aimants sont disposés dans les logements laissés par les tôles; ils sont maintenus radialement par des épanouissements polaires des pôles, tels que ceux référencés 11A et 11B pour le pôle 11.

L'ensemble des pôles et des aimants est fixé à l'aide d'un profilé 30 en matériau de préférence amagnétique, choisi par exemple dans le groupe constitué par les alliages d'aluminium, les alliages de cuivre, l'acier inoxydable austénitique, la fibre de verre et la fibre de carbone. Ce profilé vient enserrer l'arbre 1. Il est d'épaisseur constante et présente la forme de quatre lobes 31, 32, 33 et 34, circulaires et presque fermés. Les lobes sont raccordés deux à deux par des portion d'arc d'un cercle ayant pour diamètre celui de l'arbre. Ces portions, référencées 41, 42, 43 et 44, viennent en contact étroit avec l'arbre.

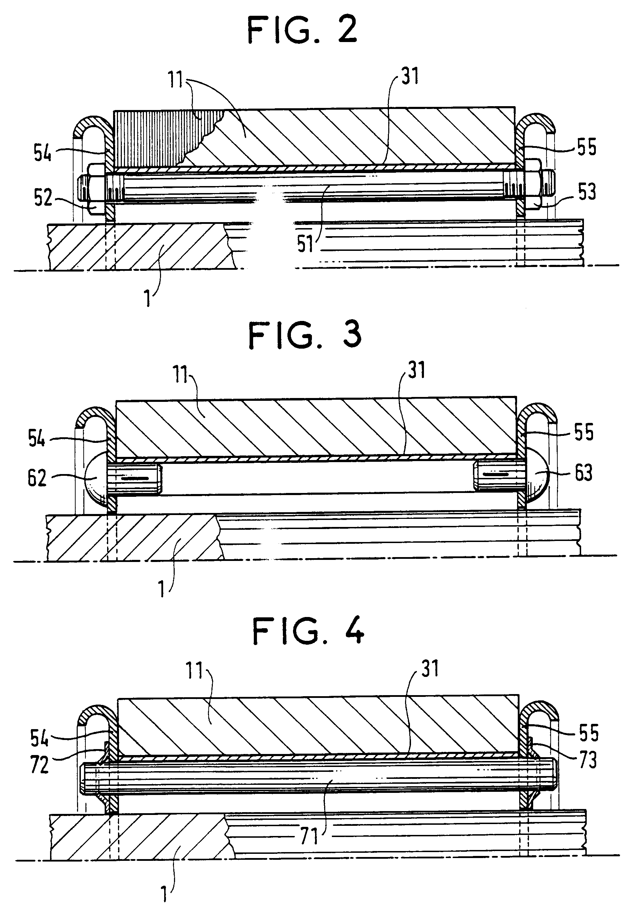

La figure 2 illustre un mode de fixation des tôles dans lequel des tiges filetées 51 sont introduites à l'intérieur des lobes et sont munies de boulons 52 et 53 venant enserrer les tôles 11, avec interposition de coupelles d'extrémité 54 et 55. Les coupelles servent également de butées longitudinales pour les aimants.

La figure 3 illustre une variante dans laquelle la fixation des tôles et des aimants du rotor est assuré au moyen des mêmes coupelles 54 et 55, mais cette fois fixées au moyen de rivets 62 et 63, en matériau de préférence amagnétique, montés à la presse

Dans une autre variante, illustrée dans la figure 4, les mêmes coupelles 54 et 55 sont enserrées grâce à des tiges lisses 71 coopérant avec des anneaux dentelés 72 et 73 (plus connus dans la terminologie anglaise sous le nom de "grip rings")

Dans les exemple précédemment décrits, les organes d'assemblages (tiges filetées ou non, rivets) sont introduits à l'intérieur des lobes du profilé et servent également à renforcer le profilé. On peut en variante, introduire ces éléments d'assemblages dans des trous des tôles, comme il est classique de le faire. De tels trous ont été représentés en traits tiretés et référencés 81 à 84 dans la figure 1.

Dans ce cas, on peut prévoir des moyens pour renforcer le profilé. Ces moyens sont par exemple constitués de tubes en métal élastique tel que l'acier, fendus, et qui sont engagés à l'intérieur des volumes délimités par les lobes. Un de ces tubes, 91, est représenté dans la figure 1. Ces tubes ont tendance à s'épandre radialement, ce qui accroît la pression du profilé sur l'arbre du rotor.

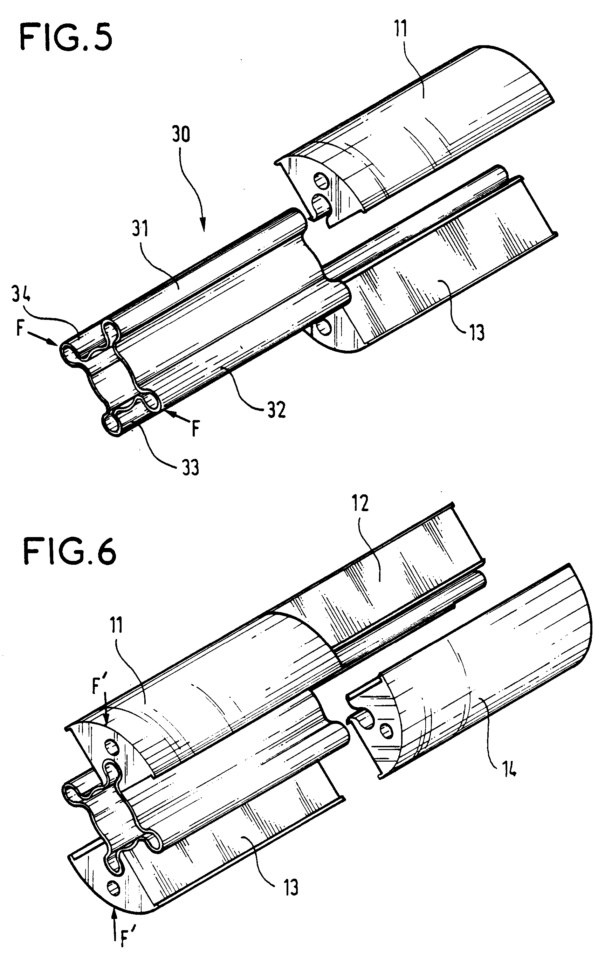

Les figures 5 et 6 illustrent le montage des tôles du rotor. Les tôles sont découpées et préassemblées, par exemple par un procédé dans lequel chaque tôle reçoit un poinçonnage provoquant une cavité sur une face et une saillie sur la face opposée, la saillie d'une tôle coopérant avec la cavité de la tôle adjacente. (Ce procédé est connu sous le nom de procédé Fastec).

On assemble deux paquets opposés 11 et 13 en les engageant dans les lobes 31 et 33; pour faciliter le glissement, on exerce des efforts F diamétralement opposés sur les autres lobes 32 et 34; pour monter les paquets 12 et 14, on applique, sur les paquets 11 et 13 déjà montés, des efforts F' diamétralement opposés.

Le profilé étant élastique, lorsque l'on supprime les efforts F ou F', les tôles restent emprisonnées.

Les aimants peuvent montés à la main dans les logements correspondants.

L'invention s'applique aux moteurs synchrones à aimants multipolaires.

## Revendications

1. Rotor pour un moteur à aimants comprenant au moins une paire de pôles magnétiques entre lesquels sont disposés des aimants à aimantation azimutale, et un arbre de rotation, caractérisé en ce que les pôles et les aimants sont solidarisés entre eux et à l'arbre du moteur par un profilé (30) d'épaisseur constante et présentant en section des lobes (31, 32, 33, 34) en nombre égal à ceux des pôles du moteur, lesdits lobes étant reliés deux à deux par des portions courbes (41, 42, 43, 44) sensiblement en arcs de cercle de diamètre voisin de celui de l'arbre (1) du moteur.

2. Rotor selon la revendication 1, caractérisé en ce que ledit profilé est choisi dans le groupe comprenant les alliages d'aluminium, les alliages de cuivre, l'acier inoxydable austénitique, la fibre de verre et la fibre de carbone.

3. Rotor selon l'une des revendications 1 et 2, caractérisé en ce qu'il comprend des moyens (91) pour renforcer le profilé (30).

4. Rotor selon la revendication 3, caractérisé en ce que lesdits moyens comprennent des tubes fendus (91) en métal élastique, engagés à l'intérieur des lobes.

5. Rotor selon l'une des revendications 1 à 4, caractérisé en ce que les tôles (11, 12, 13, 14) du rotor sont assemblées au moyen de coupelles d'extrémité (54, 55) serrées par des tiges filetées (51) munies d'écrous (52, 53).

6. Rotor selon l'une des revendications 1 à 4, caractérisé en ce que les tôles (11, 12, 13, 14) du rotor sont assemblées au moyen de coupelles d'extrémité (54, 55) serrées par des tiges lisses (71) munies d'anneaux dentelés (72, 73).

7. Rotor selon l'une des revendications 1 à 4, caractérisé en ce que les tôles (11, 12, 13, 14) du rotor sont assemblées au moyen de coupelles d'extrémité (54, 55) serrées par des rivets (62, 63).

## Patentansprüche

1. Rotor für einen Motor mit Magneten, der mindestens ein Paar von Magnetpolen, zwischen denen Magnete mit azimutaler Magnetisierung angeordnet sind, und eine Welle aufweist, dadurch gekennzeichnet, daß die Pole und die Magnete miteinander und mit der Motorwelle fest verbunden werden durch ein Profilteil (30) konstanter Dicke, das im Querschnitt kleeblattförmige Keulen (31, 32, 33, 34) in gleicher Anzahl wie die Pole des Motors aufweist, wobei die Keulen je paarweise über gekrümmte Bereiche (41, 42, 43, 44) miteinander verbunden sind, die Kreisbögen eines Durchmessers nahe dem der Welle (1) des Motors bilden.

2. Rotor nach Anspruch 1, dadurch gekennzeichnet, daß das Material des Profilteil aus der Gruppe ausgewählt wird, die Aluminiumlegierungen, Kupferlegierungen, austenitischen nichtrostenden Stahl, Glasfasern und Kohlefasern enthält.

3. Rotor nach einem der Ansprüche 1 und 2, dadurch gekennzeichnet, daß er Mittel (91) zur Verstärkung des Profilteils (30) aufweist.

4. Rotor nach Anspruch 3, dadurch gekennzeichnet, daß die Mittel geschlitzte Rohre (91) aus elastischem Metall aufweisen, die in die Keulen eingeführt sind.

5. Rotor nach einem der Ansprüche 1 bis 4, dadurch gekennzeichnet, daß die Bleche (11, 12, 13, 14) des Rotors mittels Endschalen (54, 55) zusammengebaut werden, die durch Gewindestäbe (51) mit Muttern (52, 53) verspannt werden.

6. Rotor nach einem der Ansprüche 1 bis 4, dadurch gekennzeichnet, daß die Bleche (11, 12, 13, 14) des Rotors mittels Endschalen (54, 55) zusammengebaut werden, die durch glatte Stäbe (71) verspannt werden, die mit gezahnten Ringen (72, 73) versehen sind.

7. Rotor nach einem der Ansprüche 1 bis 4, dadurch gekennzeichnet, daß die Bleche (11, 12, 13, 14) des Rotors mittels Endschalen (54, 55) zusammengebaut werden, die durch Nieten (62, 63) verspannt werden.

## Claims

1. A rotor for a motor having magnets, the rotor comprising a rotary shaft and at least one pair of magnetic poles with magnets disposed therebetween having azimuth magnetization, the rotor being characterized in that the poles and the magnets are fixed to each other and to the shaft of the motor by a section member (30) of constant thickness having a section with as many lobes (31, 32, 33, 34) as there are poles in the motor, said lobes being interconnected in pairs by curved portions (41, 42, 43, 44) which are substantially circular arcs of diameter close to that of the shaft (1) of the motor.

2. A rotor according to claim 1, characterized in that said section member is made of a material selected from the group comprising: aluminum alloys, copper alloys, austenitic stainless steel, glass fiber, and carbon fiber.

3. A rotor according to claim 1 or 2, characterized in that it includes means (91) for reinforcing the section member (30).

4. A rotor according to claim 3, characterized in that said means comprise split tubes (91) of resilient metal engaged inside the lobes.

5. A rotor according to any one of claims 1 to 4, characterized in that the laminations (11, 12, 13, 14) of the rotor are assembled by means of end plates (54, 55) clamped together by threaded rods (51) provided with nuts (52, 53).

6. A rotor according to any one of claims 1 to 4, characterized in that the laminations (11, 12, 13, 14) of the rotor are assembled by means of end plates (54, 55) clamped together by smooth rods (71) provided with grip rings (72, 73).

7. A rotor according to any one of claims 1 to 4, characterized in that the laminations (11, 12, 13, 14) of the rotor are assembled by means of end plates (54, 55) clamped together by rivets (62, 63).
